# FASCICULE DE BREVET EUROPEEN

(11) **EP 2 406 912 B1**
(45) Date de publication et mention de la délivrance du brevet: **30.01.2013**
(21) Numéro de dépôt: 09779230.3
(22) Date de dépôt: 31.03.2009
(51) Int. Cl.: G06F 11/16, G06F 11/20, H04L 1/22

(54) **CONTRÔLE EN SÉCURITÉ DE L'EXCLUSIVITÉ D'UN ÉTAT ACTIF/PASSIF D'UNITÉS DE TRAITEMENTS**
SICHERES PRÜFEN DER EXKLUSIVITÄT EINES AKTIV/PASSIV-ZUSTANDS VON VERARBEITUNGSEINHEITEN
SECURE CHECKING OF THE EXCLUSIVITY OF AN ACTIVE/PASSIVE STATE OF PROCESSING UNITS

(30) Priorité: 12.03.2009 EP 09290180
(43) Date de publication de la demande: 18.01.2012
(73) Titulaire: SIEMENS SAS, 92320 Saint-Denis (FR)
(72) Inventeur: CHENU, Eric, F-92370 Chaville (FR)
(74) Mandataire: Fischer, Michael
(86) Numéro de dépôt international: PCT/EP2009/053778
(87) Numéro de publication internationale: WO 2010/102677

(56) Documents cités:
- US-A- 4 823 256
- US-B1- 6 357 024

## Description

La présente invention concerne un dispositif et une méthode de contrôle d'une exclusivité d'un état binaire, actif/passif, d'unités de traitements redondantes, selon les préambules des revendications 1 et 8.

En particulier, l'invention se rapporte aux architectures formées d'unités redondantes intrinsèquement sûres, liées en particulier à la sécurisation de véhicules guidés et pour lesquelles la garantie qu'une et une seule desdites unités soit dans un état actif est une condition nécessaire au fonctionnement correct et sécuritaire desdits véhicules. En particulier, l'invention se rapporte au contrôle en sécurité de l'exclusivité de l'état actif/passif desdites unités.

Une unité est qualifiée de redondante s'il existe au sein d'une même architecture au moins deux unités identiques, chacune pouvant accomplir les fonctions, ou autrement dit, le travail, de l'autre unité. De plus, par exclusivité il est fait référence au fait que parmi des unités redondantes formant ladite architecture, une et une seule desdites unités est active, i.e. dans l'état actif, à un temps donné, alors que, au même moment, i.e. au même temps, toutes les autres unités sont passives, i.e. dans l'état passif. Les termes « véhicules guidés » font quant à eux en particulier référence aux moyens de transports en commun tels que des bus, trolleybus, tramways, métros, trains ou unités de train, etc., pour lesquels l'aspect sécuritaire est très important. De telles architectures redondées sont par exemple utilisées dans des calculateurs de pilotage automatique desdits véhicules guidés.

Le contrôle en sécurité de l'exclusivité d'un état actif/passif d'unités redondantes peut être réalisé au moyen d'un dispositif de contrôle comprenant :
- une entrée sécuritaire, i.e. un moyen de contrôle apte à contrôler et à confirmer l'exclusivité dudit état, intégrée à chacune desdites unités,
- un relais électromécanique de sécurité, i.e. un dispositif de communication connecté à chacune desdites entrées sécuritaires et apte à transmettre à au moins une desdites entrées sécuritaires un signal exclusif relatif à l'exclusivité dudit état.

Malheureusement, ledit dispositif de contrôle a plusieurs inconvénients majeurs :
- un encombrement conséquent : la place nécessaire à sa réalisation en fait un dispositif de contrôle encombrant, notamment dans le cadre d'une utilisation avec plusieurs unités redondantes,
- un coût élevé, notamment dans le cadre d'une utilisation avec plusieurs unités redondantes,
- un manque de fiabilité : l'utilisation d'éléments électromécaniques réduit la fiabilité de la fonction d'exclusivité de l'état actif/passif des unités redondantes, notamment à cause de pannes d'un mécanisme de contact dudit relais,
- une sensibilité importante aux chocs et aux vibrations liée à l'utilisation d'éléments électromécaniques.
- un manque de diversité auprès des fournisseurs.

Le document US-B1-6357024 décrit une méthode de contrôle en sécurité d'une exclusivité d'un état binaire d'unités redondantes.

Un but de la présente invention est de proposer un dispositif et une méthode garantissant un contrôle en sécurité de l'exclusivité d'un état actif/passif d'unités redondantes avec un niveau de fiabilité élevé, i.e. caractérisé par un niveau de sécurité atteignant au moins 10⁻¹¹ défaillances du contrôle par heure, ainsi qu'un encombrement et un coût faibles.

Un autre but de l'invention consiste à réaliser un dispositif qui soit compact, fonctionnel, libre de tout élément électromécanique, libre d'entrées sécuritaires, et pouvant garantir l'exclusivité de l'état actif/passif de plusieurs unités redondées, libre d'une limitation quant au nombre desdites unités redondées.

Selon ces buts, un dispositif et une méthode sont proposés par le contenu des revendications 1 et 8. Un ensemble de sous-revendications présente également des avantages de l'invention.

A partir d'une méthode de contrôle en sécurité d'une exclusivité d'un état binaire, actif/passif, d'unités redondantes comprenant :
- une transmission par un dispositif de communication exclusif d'un signal exclusif relatif à l'exclusivité dudit état à au moins un moyen de contrôle, ledit moyen de contrôle étant intégré dans chacune desdites unités redondantes,
- un contrôle et une confirmation de l'exclusivité dudit état par ledit moyen de contrôle,
la méthode selon l'invention est caractérisée par
- une transmission par chaque unité redondante active d'un signal identitaire audit dispositif de communication exclusif, ledit signal identitaire étant spécifique à chaque unité qui le transmet, en particulier relatif à l'identité de ladite unité,
- une réception par ledit dispositif de communication exclusif d'au moins un desdits signaux identitaires provenant desdites unités redondantes,
- une production par ledit dispositif de communication exclusif dudit signal exclusif à partir d'au moins un desdits signaux identitaires,
- une détermination de ladite exclusivité basée sur une lecture dudit signal exclusif par ledit moyen de contrôle.

Avantageusement, la méthode selon l'invention est caractérisée en particulier par une production par chacune desdites unités redondantes dudit signal identitaire spécifique. Ainsi, dans un groupe d'unités redondantes, chaque unité produit son propre signal identitaire qui est à chaque fois différent du signal identitaire produit par chacune des autres unités redondantes du groupe.

En particulier, la méthode selon l'invention est caractérisée en ce que ladite production dudit signal exclusif est réalisée libre de relais/commutateurs électromécaniques. Avantageusement, le fonctionnement libre de relais/commutateurs électromécaniques du dispositif de communication exclusif permet d'éviter non seulement toutes les pannes et défaillances techniques liées à l'utilisation de pièces électromécaniques, mais permet aussi de ne pas être limité au niveau du nombre d'unités redondantes transmettant ledit signal identitaire audit dispositif de communication exclusif, alors que ce nombre était limité à deux dans le cas par exemple d'un relais électromécanique. En effet, la méthode selon l'invention est caractérisée par une garantie d'une unique unité active parmi un groupe d'unités transmettant lesdits signaux identitaires audit dispositif de communication exclusif, ledit groupe pouvant comporter un nombre d'unités supérieur ou égal à deux.

D'autre part, la méthode selon l'invention est avantageusement caractérisée en ce que ledit signal exclusif est fonction sans altération d'un au plus desdits signaux identitaires. En effet, le dispositif de communication exclusif est apte à produire ledit signal exclusif en fonction d'au moins un desdits signaux identitaires. De plus, seules les unités actives sont capables de transmettre un signal identitaire. En d'autres termes, une unité inactive ne transmet pas ledit signal identitaire.

Ainsi, dans un premier cas, si un et un seul signal identitaire est transmis audit dispositif de communication exclusif, alors le signal exclusif sera produit à partir dudit signal identitaire sans altérer ce dernier. Conséquemment, le signal exclusif sera lisible pour le moyen de contrôle intégré à l'unité active, car il sera une fonction dudit signal identitaire libre d'altération. Le moyen de contrôle sera alors apte à en déduire l'exclusivité de l'état actif de l'unité à laquelle il appartient.

Dans un second cas, si plusieurs signaux identitaires sont transmis au même moment audit dispositif de communication exclusif, le signal exclusif produit à partir desdits signaux identitaires sera un mélange ou une combinaison de ces derniers, qui se seront en particulier brouillés mutuellement, devenant alors illisible pour ledit moyen de contrôle. En d'autres termes, le dispositif de communication exclusif aura altéré lesdits signaux identitaires afin de produire ledit signal exclusif, car le dispositif de communication exclusif est uniquement apte à transmettre libre d'altération au plus un seul signal identitaire à un instant donné. Autrement dit, le dispositif de communication exclusif est apte à transmettre un signal identitaire libre d'altération uniquement lorsque ce dernier est l'unique signal réceptionné par le dispositif de communication exclusif à un instant donné.

En effet, la méthode selon l'invention est en particulier caractérisée par un mélange et/ou brouillement mutuel d'un signal identitaire avec au moins un autre signal identitaire provenant d'une autre unité dès qu'au moins deux unités sont actives simultanément, lesdits mélange et/ou brouillement étant réalisés par ledit dispositif de communication exclusif. Le signal exclusif ainsi transmis aux différents moyens de contrôle sera illisible par ces derniers, car les signaux identitaires d'origine, produits et transmis par chacune desdites unités actives, auront été altérés par ledit brouillement et/ou ledit mélange. Il en résulte que les moyens de contrôle de chacune desdites unités actives concluront à une non-exclusivité de l'état actif de leurs unités respectives du fait de l'illisibilité dudit signal exclusif.

Finalement, dans un troisième cas, et en particulier si aucune desdites unités redondantes n'est active, les signaux, que ce soit respectivement des signaux identitaires ou le signal exclusif, ne seront transmis respectivement ni au dispositif de communication exclusif, ni au moyen de contrôle. Ledit moyen de contrôle est alors en particulier apte à conclure à une inactivité de l'ensemble desdites unités redondantes, en particulier, de l'unité à laquelle il appartient, lors de la non-réception dudit signal exclusif. En sécurité, cette situation sera considérée comme une non-exclusivité de l'état actif.

La méthode selon l'invention est en outre caractérisée en ce que ladite détermination de ladite exclusivité est basée sur une construction d'une signature propre à ladite unité, à partir de la lecture dudit signal exclusif. Avantageusement, le moyen de contrôle est capable de construire ladite signature à partir du signal exclusif. Si une et une seule desdites unités redondantes est active à un temps donné, la signature construite par le moyen de contrôle sera reconnue par ledit moyen qui en déduira l'exclusivité de l'état actif de ladite unité. Par contre, si la signature construite n'est pas reconnue par ledit moyen de contrôle, ce dernier en déduira la non-exclusivité de l'état actif de ladite unité, i.e. que plus d'une unités ont été ou sont actives au même moment.

Dans ce cadre, la méthode selon l'invention est caractérisée en ce que lesdites productions et transmissions desdits signaux identitaires émis par chacune desdites unités sont effectuées par un dispositif de signature intégré à chacune desdites unités. En particulier, une unité active produit et transmet ledit signal identitaire qui lui est propre. Par contre une unité inactive soit produit, mais ne transmet pas le signal identitaire qui lui est propre, ou alors soit ni ne produit, ni ne transmet le signal identitaire qui lui est propre. En particulier, le dispositif de signature est apte à produire un signal identitaire spécifique à l'unité à laquelle il est intégré et dont une spécificité dudit signal identitaire est basée sur une suite de données binaire. De manière avantageuse, lesdits signaux identitaires sont produits de manière cyclique, avec ou sans synchronisation temporelle avec lesdits moyens de contrôle et lesdits dispositifs de communication.

La méthode selon l'invention est en outre caractérisée par une production dudit signal exclusif basée sur une fonction logique simple. De manière non restrictive, ni limitative, la production dudit signal exclusif peut être basée sur des éléments optiques, électro-optiques, ou électriques.

A partir d'un dispositif de contrôle en sécurité d'une exclusivité d'un état binaire, actif/passif, d'unités redondantes, ledit dispositif comprenant :
- au moins un dispositif de communication exclusif dudit état apte à transmettre à au moins un moyen de contrôle intégré à chacune desdites unités un signal exclusif relatif à l'exclusivité dudit état,
- ledit moyen de contrôle apte à contrôler et à confirmer l'exclusivité dudit état,
le dispositif selon l'invention est caractérisé en ce que :
- chacune desdites unités redondantes dans l'état actif est apte à transmettre audit dispositif de communication exclusif un signal identitaire, ledit signal identitaire étant spécifique et identitaire à l'unité qui le transmet, i.e. en particulier ledit signal identitaire est relatif à l'identité de l'unité qui le transmet,
- ledit dispositif de communication exclusif est apte à recevoir au moins un desdits signaux identitaires provenant desdites unités redondantes,
- ledit dispositif de communication exclusif est apte à produire ledit signal exclusif à partir d'au moins un desdits signaux identitaires reçus,
- ledit moyen de contrôle est apte à déterminer l'exclusivité de l'état de ladite unité à partir d'une lecture dudit signal exclusif.

En particulier, le dispositif selon l'invention est caractérisé en ce que chacune desdites unités redondantes est apte à produire ledit signal identitaire. En d'autres termes, dans un groupe d'unités redondantes, chaque unité produit son propre signal identitaire qui est à chaque fois différent du signal identitaire produit par une des autres unités redondantes du groupe.

En particulier, le dispositif selon l'invention est caractérisé en ce que ledit dispositif de communication exclusif est apte à produire ledit signal exclusif selon une méthode libre de commutateurs électromécaniques. Avantageusement, comme ledit dispositif de communication exclusif est libre de commutateurs électromécaniques, les défaillances de contrôle de l'exclusivité liées aux pannes d'origines mécaniques sont ainsi évitées, et de plus, le nombre d'unités redondantes transmettant ledit signal identitaire n'est pas limité à deux, ce qui serait par contre le cas lors d'une utilisation de commutateurs électromécaniques dans le dispositif de communication exclusif, en particulier lors d'une utilisation du relais électromécanique. Le dispositif selon l'invention est apte à garantir l'exclusivité active d'une et une seule unité parmi un groupe d'unités transmettant lesdits signaux identitaires audit dispositif de communication exclusif, ledit groupe pouvant comporter un nombre d'unités supérieur ou égal à deux.

En outre, le dispositif selon l'invention est caractérisé en ce que ledit dispositif de communication exclusif est apte à transmettre libre d'altération au plus un desdits signaux identitaires provenant desdites unités redondantes lors de la production dudit signal exclusif. De cette façon, le dispositif de contrôle est apte à garantir qu'un signal identitaire au plus est propagé sans altération, en particulier via une fonction de transfert prédéfinie, afin de produire ledit signal exclusif qui sera transmis à chacun desdits moyens de contrôle équipant chacune desdites unités. En particulier, ledit signal identitaire n'est pas transmis par l'unité dans l'état passif, mais uniquement par l'unité dans l'état actif. A cette fin, l'unité dans l'état passif peut notamment produire ledit signal identitaire, mais empêcher sa transmission, ou simplement, ne pas produire ledit signal identitaire.

Lorsque plusieurs signaux identitaires représentatifs de l'état actif de plusieurs unités sont transmis au même moment audit dispositif de communication exclusif, le signal exclusif produit par ledit dispositif de communication exclusif à partir desdits signaux identitaires sera un mélange ou une combinaison de ces derniers, qui se seront en particulier brouillés et mélangés mutuellement. En d'autres termes, ledit dispositif de communication exclusif est apte à mélanger et/ou brouiller mutuellement un signal identitaire avec au moins un autre signal identitaire provenant d'une autre unité dès que au moins deux unités sont actives simultanément, car le dispositif de communication exclusif est uniquement apte à transmettre libre d'altération au plus un seul signal identitaire. Le signal exclusif produit lors de la réception par le dispositif de communication exclusif de plusieurs signaux identitaires au même moment est un signal brouillé, illisible pour lesdits moyens de contrôle équipant chacune desdites unités. A partir de cette caractéristique illisible dudit signal exclusif, i.e. son illisibilité, le moyen de contrôle est apte à déduire la non-exclusivité de l'état actif de l'unité à laquelle il appartient.

En particulier, ledit moyen de contrôle est apte à construire à partir dudit signal exclusif une signature permettant de vérifier l'exclusivité d'état de ladite unité. Ladite signature est propre à l'unité à laquelle le moyen de contrôle appartient. De plus, la signature construite à partir d'un signal exclusif illisible ne sera pas reconnue par ledit moyen de contrôle, i.e. le moyen de contrôle est incapable de lire une signature illisible, et conséquemment, ledit moyen de contrôle conclura à la non-exclusivité de l'état actif de l'unité à laquelle il appartient, alors que la signature construite à partir d'un signal exclusif lisible, i.e. pouvant être lu, sera reconnue par ledit moyen de contrôle qui sera apte à déduire l'exclusivité de l'état actif de l'unité à laquelle il appartient.

En outre, le dispositif selon l'invention est caractérisé en ce que chacune desdites unités comporte un dispositif de signature apte à effectuer lesdites productions et transmissions dudit signal identitaire. En particulier, une unité active produit et transmet ledit signal identitaire qui lui est propre. Par contre une unité inactive soit produit, mais ne transmet pas le signal identitaire qui lui est propre, ou alors ni ne produit, ni ne transmet le signal identitaire qui lui est propre. En particulier, le dispositif de signature est apte à produire une suite de données binaire en tant que signal spécifique de ladite unité à laquelle il appartient. De plus, le dispositif de signature est apte à produire ledit signal identitaire de manière cyclique, mais aussi et en particulier, de manière continue, intermittente, ou selon une combinaison de toutes ou d'une partie des caractéristiques cycliques, continues et intermittentes de production. Finalement, le dispositif de signature est apte à synchroniser temporellement ladite production de signature avec lesdits moyens de contrôle et lesdits dispositifs de communication.

Egalement, le dispositif selon l'invention est caractérisé en ce que ledit dispositif de communication exclusif est apte à produire ledit signal exclusif à partir d'une fonction logique simple. De façon ni restrictive, ni limitative, le dispositif de communication exclusif comprend des éléments optiques, électro-optiques, ou électriques.

Finalement, un exemple relatif à l'état de la technique et un exemple non limitatif de réalisation et d'application de l'invention sont fournis à l'aide des figures suivantes :
- Figure 1: exemple de réalisation de dispositif de contrôle de l'exclusivité active/passive d'unités redondantes basé sur un relais de sécurité dont l'état est relu par une entrée sécuritaire, selon l'état de la technique.
- Figure 2: exemple de réalisation, selon l'invention, de dispositif de contrôle de l'exclusivité active/passive d'unités redondantes libre de tout relais et de toute entrée sécuritaire.
- Figure 3: exemple de réalisation selon l'invention d'un dispositif de contrôle de l'exclusivité active/passive d'unités redondantes dont le dispositif de communication exclusif est basé sur un bus différentiel.
- Figure 4: exemple de réalisation selon l'invention d'un dispositif de contrôle de l'exclusivité active/passive d'unités redondantes dont le dispositif de communication exclusif est basé un transformateur.

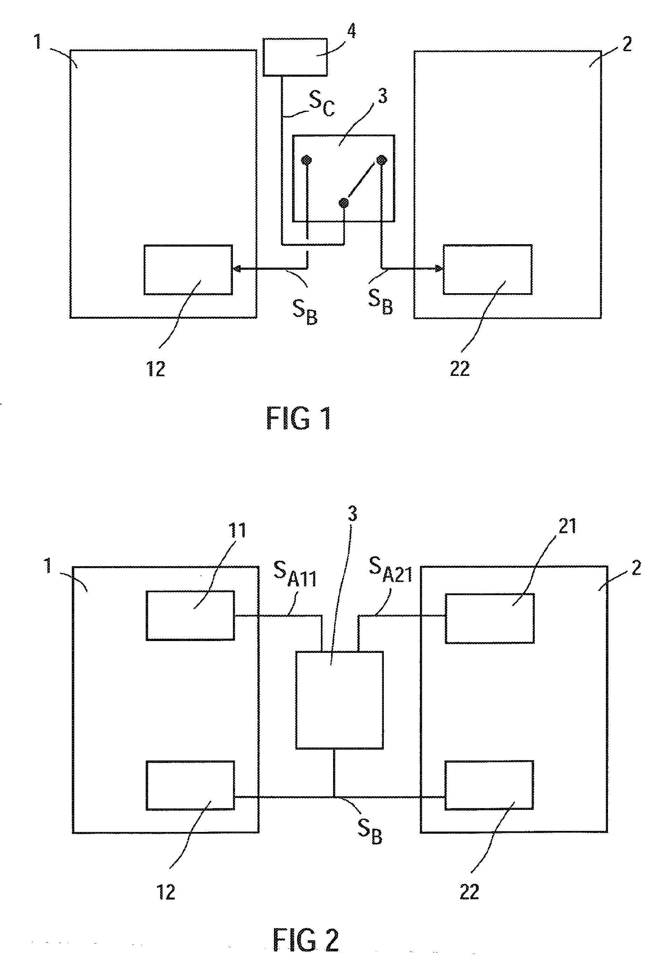

A titre d'exemple illustrant l'état de la technique, la figure 1 montre un dispositif de contrôle en sécurité de l'exclusivité d'un état actif/passif d'unités (1, 2) redondantes comprenant :
- un relais électromécanique de sécurité (3), i.e. un dispositif de communication apte à transmettre à au moins une entrée sécuritaire (12, 22) intégrée à chacune desdites unités (1, 2) un signal exclusif (S_{B}) relatif à l'exclusivité dudit état, en particulier, ledit relais (3) fournit en énergie, transmise par une alimentation en tension (4) via un signal électrique (S_{C}), une et une seule desdites entrées sécuritaires (12, 22),
- lesdites entrées sécuritaires (12, 22) garantissent en sécurité l'exclusivité active/passive, étant donné que chacune d'elles est un moyen de contrôle apte à contrôler et à confirmer l'exclusivité dudit état.

La figure 2 illustre un dispositif de contrôle en sécurité d'une exclusivité d'un état binaire, actif/passif, d'unités (1, 2) redondantes, ledit dispositif comprenant :
- au moins un dispositif de communication exclusif (3) dudit état apte à transmettre à au moins un moyen de contrôle (12, 22) intégré à chacune desdites unités (1, 2) un signal exclusif (S_{B}) relatif à l'exclusivité dudit état,
- ledit moyen de contrôle (12, 22) apte à contrôler et à confirmer l'exclusivité dudit état,
caractérisé en ce que
- chacune desdites unités (1, 2) redondantes dans l'état actif est apte à transmettre audit dispositif de communication exclusif (3) un signal identitaire (S_{A11}, S_{A21}), ledit signal identitaire étant spécifique et identitaire à l'unité qui le transmet en portant par exemple une marque de son identité,
- ledit dispositif de communication exclusif (3) est apte à recevoir au moins un desdits signaux identitaires (S_{A11}, S_{A21}) provenant desdites unités (1, 2) redondantes,
- ledit dispositif de communication exclusif (3) est apte à produire ledit signal exclusif (S_{B}) à partir d'au moins un desdits signaux identitaires (S_{A11}, S_{A21}),
- ledit moyen de contrôle (12, 22) est apte à déterminer l'exclusivité de l'état de ladite unité à partir d'une lecture dudit signal exclusif (S_{B}).

En particulier, chacune desdites unités (1, 2) redondantes est apte à produire ledit signal identitaire (S_{A11}, S_{A21}) spécifique et identitaire à l'unité qui le produit, i.e chaque unité produit un signal identitaire qui lui est propre et qui est différent d'un autre signal identitaire produit par d'autres unités. De plus, et en particulier, chacune desdites unités (1, 2) comporte un dispositif de signature (11, 21) apte à effectuer lesdites productions et transmissions dudit signal identitaire (S_{A11}, S_{A21}). De manière avantageuse, lesdits dispositifs de signature sont aptes à produire un signal identitaire (S_{A11}, S_{A21}) composé d'une suite de données, par exemple, une séquence binaire, qui peut être utilisée par le moyen de contrôle afin de produire cycliquement une signature par un calcul approprié, par exemple, par une division polynomiale, ladite signature permettant de déterminer ladite exclusivité de l'état actif/passif de l'unité à laquelle il appartient.

Plus précisément, chacune desdites unités produit sa propre séquence binaire, à un rythme différent ou égal, synchronisé ou non synchronisé en temps, de manière continue ou intermittente. Avantageusement, au moins un driver différentiel peut être intégré au dispositif de signature (11, 21) de sorte que, lorsque l'unité est inactive, le driver différentiel se trouve dans un état de haute impédance, empêchant la transmission du signal identitaire (S_{A11}, S_{A21}) au dispositif de communication exclusif (3). Inversement, lorsque l'unité est active, le driver se trouve dans un état de basse impédance, permettant la transmission du signal identitaire (S_{A11}, S_{A21}) au dispositif de communication exclusif (3).

Le dispositif de communication exclusif (3) est réalisé de tel sorte que le signal exclusif (S_{B}) est lisible pour ledit moyen de contrôle (12, 22) si et seulement si l'unité, à laquelle le moyen de contrôle (12, 22) est intégré, est l'unique unité active. Parmi un groupe d'unités redondantes, si plus d'une unité est active au même moment, le dispositif de communication exclusif (3) produira un signal illisible pour lesdits moyens de contrôle équipant chacune desdites unités redondantes, ladite illisibilité du signal étant alors une caractéristique de la non-exclusivité de l'état actif de chacune desdites unités. En particulier, l'illisibilité sera déterminée en fonction du calcul de ladite signature produite par ledit moyen de contrôle. Le calcul de ladite signature permet au moyen de contrôle de déterminer l'exclusivité de l'état actif/passif de l'unité à laquelle il appartient. En particulier, le moyen de contrôle (12, 22) comprend avantageusement des dispositifs optocoupleurs aptes à lire et transmettre le signal exclusif.

De manière non limitative, différents modes de réalisations du dispositif de communication exclusif (3) sont possible

Dans un premier mode de réalisation, ledit dispositif de communication exclusif (3) comprend un unique lien permettant de transporter les signaux identitaires réceptionnés de différentes unités redondantes, ledit lien étant par exemple un fil électrique un lien optique, magnétique ou radiofréquence. Plus précisément, les signaux identitaires provenant de différentes unités arrivent au dispositif de communication exclusif (3) par des chemins indépendants ou dépendants. Une fois réceptionnés par le dispositif de communication exclusif, ces signaux identitaires sont transportés au moyen dudit unique lien, de sorte que ledit lien est un passage obligé desdits signaux identitaires transmis par les dispositifs de signature desdites unités redondantes. Avantageusement, il n'est ainsi pas possible de créer par une coupure des chemins indépendants partant des dispositifs de signature de chacune desdites unités et rejoignant leurs moyens de contrôle respectifs.

De plus, selon ce premier mode de réalisation, lesdits signaux identitaires, en particulier, lesdites séquences, se mélangent et/ou se brouillent mutuellement au niveau dudit lien unique si plus d'une unité est dans un état actif au même moment, de sorte qu'il en résulte un signal exclusif illisible pour lesdits moyens de contrôle (12, 22). Au contraire, si une et une seule unité est active à un moment donné, le signal exclusif produit par le dispositif de communication exclusif sera lisible pour ladite unité active et illisible pour les unités inactives. Ainsi, selon ce premier mode de réalisation, ledit signal exclusif est produit par ledit dispositif de communication exclusif à partir du transfert à un même instant de un ou plusieurs signaux identitaires à travers ledit unique lien.

Dans un second mode de réalisation, une fonction logique simple, par exemple un "OU" exclusif aussi appelé "Xor", permet la production d'un signal exclusif lisible uniquement en cas d'exclusivité de l'état actif d'une unité à un moment donné. A cette fin, l'unité passive doit être apte à figer ou stopper la production et/ou la transmission du signal identitaire lorsqu'elle n'est pas active, ou lorsqu'une autre unité est active. Dans ce but, un ou plusieurs drivers différentiels peuvent être avantageusement utilisés. De manière non exhaustive, la fonction logique peut être réalisée à partir d'un transformateur, de dispositifs optocoupleurs, d'une porte logique, mais aussi, à partir de dispositifs câblés, magnétiques, optiques ou radio fréquence.

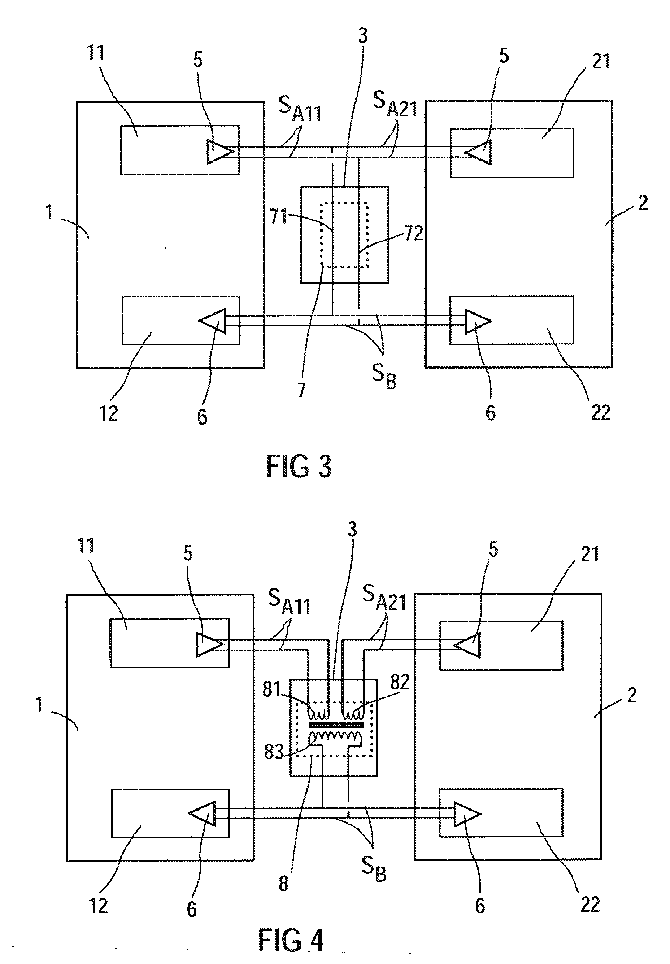

Un troisième mode de réalisation du dispositif de communication exclusif est basé sur un bus de données permettant de transmettre une suite de données qui seront traitées par le moyen de contrôle à partir d'un algorithme adapté pour produire une signature. Il peut s'agir par exemple d'un bus différentiel constitué ou non de deux fils torsadés, ou encore, d'un bus parallèle tel que, par exemple, un bus PCI ou un bus VME. Concrètement, la figure 3 présente un dispositif de contrôle en sécurité d'un état actif/passif d'unités (1, 2) redondantes utilisant ledit bus de données. Dans ce troisième mode de réalisation, chaque dispositif de signature (11, 21) de chacune des deux unités (1, 2) comporte un driver différentiel (5) isolé, par l'intermédiaire duquel est émis le signal identitaire (S_{A11}, S_{A21}), par exemple une séquence binaire. Le dispositif de communication exclusif (3) comprend un bus de données différentiel (7) constitué par deux fils (71, 72), ledit bus de données différentiel (7) recevant lesdits signaux identitaires (S_{A11}, S_{A21}) et transmettant, à partir de ces derniers, ledit signal exclusif (S_{B}) à des optocoupleurs (6) compris dans lesdits moyens de contrôle (12, 22). En mode nominal, seule l'unité active émet ledit signal identitaire sur ledit bus de données différentiel (7), l'autre unité plaçant son driver différentiel en état de haute impédance. Si les deux unités sont actives en même temps, les drivers différentiels (5) de chacune desdites unités (1, 2) entrent en conflit, de sorte que le bus de données différentiel (7) transmettra un signal exclusif (S_{B}) illisible pour lesdits moyens de contrôle (12, 22). Une précaution de câblage permet de garantir l'exclusivité: chacun des deux fils (71, 72) du bus de données différentiel (7) doit être un passage obligé pour chacun des deux signaux identitaires (S_{A11}, S_{A21}) transmis par les dispositifs de signature (11, 21) de chacune des deux unités (1, 2), de sorte qu'il ne soit pas possible par une coupure de créer deux chemins indépendants, i.e. un premier chemin pour la première unité (1) allant du dispositif de signature (11) au moyen de contrôle (12) et un second chemin pour la seconde unité (2) allant du dispositif de signature (21) au moyen de contrôle (22).

Finalement, un quatrième mode de réalisation dudit dispositif de communication exclusif (3) est présenté par la figure 4. Dans ce dernier mode de réalisation, les signaux identitaires (S_{A11,} S_{A21}) provenant des dispositifs de signature (11, 21) de respectivement deux unités (1, 2) redondantes sont transmis par l'intermédiaire de drivers différentiels (5) au dispositif de communication exclusif (3) comprenant un transformateur (8) à trois enroulements: deux enroulements primaires (81, 82) associés audits signaux identitaires (S_{A11}, S_{A21}) et un enroulement secondaire (83) associé audit signal exclusif (S_{B}). Lesdites deux unités (1, 2) peuvent émettre respectivement un signal identitaire, formé par exemple d'une séquence binaire, chacune sur un enroulement primaire respectif (81, 82). En mode nominal, seule l'unité active émet ledit signal identitaire sur un desdits enroulements primaires (81, 82), de sorte que le signal identitaire est transmis à l'enroulement secondaire (83) sans altération. L'unité inactive, quant à elle, est apte à placer son driver différentiel en état de haute impédance. Conséquemment, l'enroulement secondaire (83) fera parvenir à un optocoupleur (6) compris dans le dispositif de contrôle (12, 22) de l'unité active un signal exclusif (S_{B}) lisible car non altéré. Si les deux unités (1, 2) sont actives au même moment, les signaux identitaires (S_{A11}, S_{A21}) provenant de chacune des unités actives se mélangeront au niveau du transformateur (8), de sorte que le dispositif de communication exclusif produira un signal exclusif (S_{B}) illisible, transmis audits dispositifs de contrôle (12, 22) de chacune desdites unités (1, 2) actives via leurs optocoupleurs respectifs (6). En alternative, il est aussi possible d'utiliser un transformateur (8) avec deux enroulements secondaires (81, 82) câblés en série. Avantageusement, le dispositif selon l'invention utilisant ce quatrième mode de réalisation pour son dispositif de communication exclusif (3) est apte à fonctionner indépendamment du débranchement d'une desdites unités (1, 2).

Eventuellement, des filtres peuvent être ajoutés au dispositif de communication exclusif (3) afin de limiter la bande passante aux besoins d'un et un seul desdits signaux identitaires à la fois, de sorte que lesdits filtres garantissent l'exclusivité de l'état actif/passif d'une unité. En effet, la largeur de la bande passante permet de laisser passer au plus un seul signal identitaire à la fois, et de ce fait, si plusieurs signaux identitaires tentent de passer en même temps, le signal exclusif produit par ledit dispositif de communication exclusif sera illisible pour lesdits moyens de contrôle. Cette caractéristique d'illisibilité du signal exclusif permettra aux moyens de contrôle de confirmer la non-exclusivité de l'état actif de l'unité à laquelle ils appartiennent respectivement, et de ce fait, il pourra en être déduit que plusieurs unités redondantes sont actives au même moment.

Une utilisation dudit dispositif et de ladite méthode selon l'invention est applicable à tout type d'équipement fonctionnant en redondance, en particulier à des calculateurs de pilotage automatique de véhicules guidés ou aussi, à des modules d'Entrées/Sorties distribuées.

En résumé, la méthode et le dispositif selon l'invention présentent plusieurs avantages par rapport aux méthodes et dispositifs existant en ce que:
- ils assurent un niveau de sécurité élevé,
- ils assurent un faible encombrement, notamment grâce à l'utilisation de composants électriques permettant une compacité du dispositif,
- ils permettent de contrôler l'exclusivité de l'état actif d'une unité parmi un nombre d'unités redondantes supérieur ou égal à deux, chacune desdites unités transmettant son signal identitaire respectif au même dispositif de communication exclusif,
- ils garantissent un faible coût de la réalisation dudit dispositif de contrôle,
- ils permettent de produire une signature propre à chaque unité garantissant l'exactitude du contrôle de l'exclusivité de l'état actif/passif,

## Revendications

1. Méthode de contrôle en sécurité d'une exclusivité d'un état binaire, actif/passif, d'unités (1, 2) redondantes comprenant :
- une transmission par un dispositif de communication exclusif (3) d'un signal d'exclusivité (S_{B}) relatif à l'exclusivité dudit état à au moins un moyen de contrôle (12, 22) intégré à chacune desdites unités (1, 2),
- un contrôle et une confirmation de l'exclusivité dudit état par ledit moyen de contrôle (12, 22),
**caractérisée par**
- une transmission par chaque unité (1, 2) redondante active d'un signal identitaire (S_{A11}, S_{A21}) audit dispositif de communication exclusif (3), ledit signal identitaire (S_{A11}, S_{A21}) étant spécifique à chaque unité (1, 2) qui le transmet,
- une réception par ledit dispositif de communication exclusif (3) d'au moins un desdits signaux identitaires (S_{A11}, S_{A21}) provenant desdites unités (1, 2) redondantes,
- une production par ledit dispositif de communication exclusif (3) dudit signal d'exclusivité (S_{B}) à partir d'au moins un desdits signaux identitaires (S_{A11}, S_{A21}),
- une détermination de ladite exclusivité basée sur une lecture dudit signal d'exclusivité (S_{B}) par ledit moyen de contrôle (12, 22).

2. Méthode de contrôle selon revendication 1 **caractérisée par** une production par chacune desdites unités (1, 2) redondantes dudit signal identitaire (S_{A11}, S_{A21}).

3. Méthode de contrôle selon une des revendications 1 à 2 **caractérisée en ce que** ledit signal d'exclusivité (S_{B}) est fonction sans altération d'un au plus desdits signaux identitaires (S_{A11}, S_{A21}).

4. Méthode de contrôle selon une des revendications 1 à 3 **caractérisée en ce que** ladite détermination de ladite exclusivité est basée sur une construction d'une signature propre à ladite unité, à partir de la lecture dudit signal d'exclusivité (S_{B}).

5. Méthode de contrôle selon une des revendications 1 à 4 **caractérisée en ce que** lesdites productions et transmissions desdits signaux identitaires (S_{A11}, S_{A21}) émis par chacune desdites unités sont effectuées par un dispositif de signature (11, 21) intégré à chacune desdites unités.

6. Méthode de contrôle selon une des revendications 1 à 5 **caractérisée en ce qu'**une spécificité dudit signal identitaire (S_{A11}, S_{A21}) est basée sur une suite de données binaire.

7. Méthode de contrôle selon une des revendications 1 à 6 **caractérisée en ce que** lesdits signaux identitaires (S_{A11}, S_{A21}) sont produits de manière cyclique.

8. Dispositif de contrôle en sécurité d'une exclusivité d'un état binaire, actif/passif, d'unités (1, 2) redondantes, ledit dispositif comprenant :
- au moins un dispositif de communication exclusif (3) dudit état apte à transmettre à au moins un moyen de contrôle (12, 22) intégré à chacune desdites unités (1, 2) un signal d'exclusivité (S_{B}) relatif à l'exclusivité dudit état,
- ledit moyen de contrôle (12, 22) apte à contrôler et à confirmer l'exclusivité dudit état,
**caractérisé en ce que**
- chacune desdites unités (1, 2) redondantes dans l'état actif est apte à transmettre audit dispositif de communication exclusif (3) un signal identitaire (S_{A11}, S_{A21}), ledit signal identitaire étant spécifique et identitaire à l'unité qui le transmet,
- ledit dispositif de communication exclusif (3) est apte à recevoir au moins un desdits signaux identitaires (S_{A11}, S_{A21}) provenant desdites unités (1, 2) redondantes,
- ledit dispositif de communication exclusif (3) est apte à produire ledit signal d'exclusivité (S_{B}) à partir d'au moins un desdits signaux identitaires (S_{A11,} S_{A21}),
- ledit moyen de contrôle (12, 22) est apte à déterminer l'exclusivité de l'état de ladite unité à partir d'une lecture dudit signal d'exclusivité (S_{B}).

9. Dispositif de contrôle selon revendication 8 **caractérisé en ce que** chacune desdites unités (1, 2) redondantes est apte à produire ledit signal identitaire (S_{A11}, S_{A21}).

10. Dispositif de contrôle selon une des revendications 8 à 9 **caractérisé en ce que** ledit dispositif de communication exclusif (3) est apte à transmettre libre d'altération au plus un desdits signaux identitaires (S_{A11,} S_{A21}) provenant desdites unités redondantes lors de la production dudit signal d'exclusivité (S_{B}).

11. Dispositif de contrôle selon une des revendications 8 à 10 **caractérisé en ce que** ledit moyen de contrôle (12, 22) est apte à construire à partir dudit signal d'exclusivité (S_{B}) une signature permettant de vérifier l'exclusivité d'état de ladite unité.

12. Dispositif de contrôle selon une des revendications 8 à 11 **caractérisé en ce que** chacune desdites unités comporte un dispositif de signature (11, 21) apte à effectuer lesdites productions et transmissions dudit signal identitaire (S_{A11}, S_{A21}).

13. Dispositif de contrôle selon une des revendications 8 à 12 **caractérisé en ce que** ledit dispositif de signature est apte à produire une suite de données binaire en tant que signal identitaire (S_{A11}, S_{A21}) spécifique de ladite unité.

14. Dispositif de contrôle selon une des revendications 8 à 13 **caractérisé en ce que** ledit dispositif de signature est apte à produire ledit signal identitaire (S_{A11}, S_{A21}) de manière cyclique.

15. Dispositif de contrôle selon une des revendications 8 à 14 **caractérisé en ce que** ledit dispositif de communication exclusif est apte à mélanger et brouiller mutuellement un signal identitaire (S_{A11}, S_{A21}) avec au moins un autre signal identitaire (S_{A11}, S_{A21}) provenant d'une autre unité dès que au moins deux unités sont actives simultanément.

## Claims

1. Method for securely checking an exclusivity of a binary, active/passive state of redundant units (1, 2) including:
- transmission by an exclusive communication device (3) of an exclusivity signal (S_{B}) relating to the exclusivity of said state to at least one checking means (12, 22) integrated into each of said units (1, 2),
- checking and confirmation of the exclusivity of said state by said checking means (12, 22),
**characterised by**
- transmission by each active redundant unit (1, 2) of an identity signal (S_{A11}, S_{A21}) to said exclusive communication device (3), said identity signal (S_{A11}, S_{A21}) being specific to each unit (1, 2) which transmits it,
- reception by said exclusive communication device (3) of at least one of said identity signals (S_{A11}, S_{A21}) originating from said redundant units (1, 2),
- production by said exclusive communication device (3) of said exclusivity signal (S_{B}) from at least one of said identity signals (S_{A11}, S_{A21}),
- determination of said exclusivity based on reading of said exclusivity signal (S_{B}) by said checking means (12, 22).

2. Checking method according to claim 1 **characterised by** production of said identity signal (S_{A11}, S_{A21}) by each of said redundant units (1, 2).

3. Checking method according to one of claims 1 to 2 **characterised in that** said exclusivity signal (S_{B}) is a function without alteration of one at most of said identity signals (S_{A11}, S_{A21}).

4. Checking method according to one of claims 1 to 3 **characterised in that** said determination of said exclusivity is based on a construction of a signature specific to said unit from the reading of said exclusivity signal (S_{B}).

5. Checking method according to one of claims 1 to 4 **characterised in that** said productions and transmissions of said identity signals (S_{A11}, S_{A21}) emitted by each of said units are performed by a signature device (11, 21) integrated into each of said units.

6. Checking method according to one of claims 1 to 5 **characterised in that** a specificity of said identity signal (S_{A11}, S_{A21}) is based on a sequence of binary data.

7. Checking method according to one of claims 1 to 6 **characterised in that** said identity signals (S_{A11}, S_{A21}) are produced cyclically.

8. Device for securely checking an exclusivity of a binary, active/passive state of redundant units (1, 2), said device including:
- at least one exclusive communication device (3) of said state capable of transmitting to at least one checking means (12, 22) integrated into each of said units (1, 2) an exclusivity signal (S_{B}) relating to the exclusivity of said state,
- said checking means (12, 22) capable of checking and confirming the exclusivity of said state,
**characterised in that**
- each of said redundant units (1, 2) in active state is capable of transmitting to said exclusive communication device (3) an identity signal (S_{A11}, S_{A21}), said identity signal being specific to and identified with the unit which transmits it,
- said exclusive communication device (3) is capable of receiving at least one of said identity signals (S_{A11}, S_{A21}) originating from said redundant units (1, 2),
- said exclusive communication device (3) is capable of producing said exclusivity signal (S_{B}) from at least one of said identity signals (S_{A11}, S_{A21}),
- said checking means (12, 22) is capable of determining the exclusivity of the state of said unit from a reading of said exclusivity signal (S_{B}).

9. Checking device according to claim 8 **characterised in that** each of said redundant units (1, 2) is capable of producing said identity signal (S_{A11}, S_{A21}).

10. Checking device according to one of claims 8 to 9 **characterised in that** said exclusive communication device (3) is capable of transmitting free from alteration one at most of said identity signals (S_{A11}, S_{A21}) originating from said redundant units during the production of said exclusivity signal (S_{B}).

11. Checking device according to one of claims 8 to 10 **characterised in that** said checking means (12, 22) is capable of constructing from said exclusivity signal (S_{B}) a signature making it possible to verify the exclusivity of the state of said unit.

12. Checking device according to one of claims 8 to 11 **characterised in that** each of said units comprises a signature device (11, 21) capable of performing said productions and transmissions of said identity signal (S_{A11,} S_{A21}).

13. Checking device according to one of claims 8 to 12 **characterised in that** said signature device is capable of producing a sequence of binary data as an identity signal (S_{A11,} S_{A21}) specific to said unit.

14. Checking device according to one of claims 8 to 13 **characterised in that** said signature device is capable of producing said identity signal (S_{A11,} S_{A21}) cyclically.

15. Checking device according to one of claims 8 to 14 **characterised in that** said exclusive communication device is capable of mutually mixing and scrambling an identity signal (S_{A11,} S_{A21}) with at least one other identity signal (S_{A11,} S_{A21}) originating from another unit whenever at least two units are active simultaneously.

## Patentansprüche

1. Verfahren zum sicheren Prüfen der Exklusivität eines binären Aktiv/Passiv-Zustands von redundanten Einheiten (1, 2), welches umfasst:
- das Senden eines Exklusivitätssignals (S_{B}) bezüglich der Exklusivität des besagten Zustands durch eine exklusive Kommunikationseinrichtung (3) an mindestens ein in jede der Einheiten (1, 2) integriertes Prüfmittel (12, 22),
- das Prüfen und Bestätigen der Exklusivität des besagten Zustands durch das Prüfmittel (12, 22),
**gekennzeichnet durch**
- das Senden eines Identitätssignals (S_{A11}, S_{A21}) **durch** jede redundante aktive Einheit (1, 2) an die besagte exklusive Kommunikationseinrichtung (3), wobei das besagte Identitätssignal (S_{A11}, S_{A21}) spezifisch für jede es sendende Einheit (1, 2) ist,
- das Empfangen mindestens eines der besagten von den besagten redundanten Einheiten (1, 2) kommenden Identitätssignale (S_{A11}, S_{A21}) **durch** die besagte exklusive Kommunikationseinrichtung (3),
- das Erzeugen des besagten Exklusivitätssignals (S_{B}) anhand mindestens eines der besagten Identitätssignale (S_{A11}, S_{A21}) **durch** die besagte exklusive Kommunikationseinrichtung (3),
- das Bestimmen der besagten Exklusivität auf der Grundlage des Lesens des besagten Exklusivitätssignals (S_{B}) **durch** das besagte Prüfmittel (12, 22).

2. Prüfverfahren nach Anspruch 1, **gekennzeichnet durch** die Erzeugung des besagten Identitätssignals (S_{A11}, S_{A21}) **durch** jede der besagten redundanten Einheiten (1, 2).

3. Prüfverfahren nach einem der Ansprüche 1 bis 2, **dadurch gekennzeichnet, dass** das besagte Exklusivitätssignal (S_{B}) ohne Veränderung von höchstens einem der besagte Identitätssignale (S_{A11}, S_{A21}) abhängig ist.

4. Prüfverfahren nach einem der Ansprüche 1 bis 3, **dadurch gekennzeichnet, dass** das besagte Bestimmen der besagten Exklusivität auf dem Aufbau einer spezifischen Signatur der besagten Einheit ausgehend vom Lesen des besagten Exklusivitätssignals (S_{B}) beruht.

5. Prüfverfahren nach einem der Ansprüche 1 bis 4, **dadurch gekennzeichnet, dass** die besagte Erzeugung und das besagte Senden der besagten von jeder der besagten Einheit ausgegebenen Identitätssignale (S_{A11}, S_{A21}) durch eine in jede der besagten Einheiten integrierte Signatureinrichtung (11, 21) erfolgt.

6. Prüfverfahren nach einem der Ansprüche 1 bis 5, **dadurch gekennzeichnet, dass** eine Besonderheit des besagten Identitätssignals (S_{A11}, S_{A21}) auf einer Folge binärer Daten beruht.

7. Prüfverfahren nach einem der Ansprüche 1 bis 6, **dadurch gekennzeichnet, dass** die besagten Identitätssignale (S_{A11}, S_{A21}) zyklisch erzeugt werden.

8. Einrichtung zum sicheren Prüfen der Exklusivität eines binären Aktiv/Passiv-Zustands redundanter Einheiten (1, 2), welche umfasst:
- mindestens eine exklusive Kommunikationseinrichtung (3) für den besagten Zustand, die geeignet ist, an mindestens ein Prüfmittel (12, 22), das in jede der besagten Einheiten (1, 2) integriert ist, ein Exklusivitätssignal (S_{B}) bezüglich der Exklusivität des besagten Zustands zu senden,
- das besagte Prüfmittel (12, 22), das geeignet ist, die Exklusivität des besagten Zustands zu prüfen und zu bestätigen,
**dadurch gekennzeichnet, dass**
- jede der besagten redundanten Einheiten (1, 2) im aktiven Zustand geeignet ist, an die besagte exklusive Kommunikationseinrichtung (3) ein Identitätssignal (S_{A11}, S_{A21}) zu senden, das identitätsspezifisch für die es sendende Einheit ist,
- die besagte exklusive Kommunikationseinrichtung (3) geeignet ist, mindestens eines der besagten von den besagten redundanten Einheiten (1, 2) kommenden Identitätssignale (S_{A11}, S_{A21}) zu empfangen,
- die besagte exklusive Kommunikationseinrichtung (3) geeignet ist, das besagte Exklusivitätssignal (S_{B}) anhand mindestens eines der besagten Identitätssignale (S_{A11}, S_{A21}) zu erzeugen,
- das besagte Prüfmittel (12, 22) geeignet ist, die Exklusivität des Zustand der besagten Einheit anhand des Lesens des besagten Exklusivitätssignals (S_{B}) zu bestimmen.

9. Prüfeinrichtung nach Anspruch 8, **dadurch gekennzeichnet, dass** jede der besagten redundanten Einheiten (1, 2) geeignet ist, das besagte Identitätssignal (S_{A11}, S_{A21}) zu erzeugen.

10. Prüfeinrichtung nach einem der Ansprüche 8 bis 9, **dadurch gekennzeichnet, dass** die besagte exklusive Kommunikationseinrichtung (3) geeignet ist, bei der Erzeugung des besagten Exklusivitätssignals (S_{B}) veränderungsfrei höchstens eines der besagten aus den besagten redundanten Einheiten kommenden Identitätssignale (S_{A11}, S_{A21}) zu senden.

11. Prüfeinrichtung nach einem der Ansprüche 8 bis 10, **dadurch gekennzeichnet, dass** die besagte Prüfeinrichtung (12, 22) geeignet ist, anhand des besagten Exklusivitätssignals (S_{B}) eine Signatur aufzubauen, die es ermöglicht, die Exklusivität des Zustand der besagten Einheit zu überprüfen.

12. Prüfeinrichtung nach einem der Ansprüche 8 bis 11, **dadurch gekennzeichnet, dass** jede der besagten Einheiten eine Signatureinrichtung (11, 21) umfasst, die geeignet ist, die besagte Erzeugung und das besagte Senden des besagten Identitätssignals (S_{A11}, S_{A21}) durchzuführen.

13. Prüfeinrichtung nach einem der Ansprüche 8 bis 12, **dadurch gekennzeichnet, dass** die besagte Signatureinrichtung geeignet ist, eine Folge binärer Daten als spezifisches Identitätssignal (S_{A11}, S_{A21}) der besagten Einheit zu erzeugen.

14. Prüfeinrichtung nach einem der Ansprüche 8 bis 13, **dadurch gekennzeichnet, dass** die besagte Signatureinrichtung geeignet ist, das besagte Identitätssignal (S_{A11}, S_{A21}) zyklisch zu erzeugen.

15. Prüfeinrichtung nach einem der Ansprüche 8 bis 14, **dadurch gekennzeichnet, dass** die besagte exklusive Kommunikationseinrichtung geeignet ist, ein Identitätssignal (S_{A11}, S_{A21}) mit mindestens einem anderen Identitätssignal (S_{A11}, S_{A21}), das aus einer anderen Einheit kommt, zu vermischen und zu verwürfeln, sobald mindestens zwei Einheiten gleichzeitig aktiv sind.
